Europäisches Patentamt

(19) European Patent Office

Office européen des brevets

(11) Publication number: **0 001 343**
**B1**

(12) **EUROPEAN PATENT SPECIFICATION**

(21) Application number: **78300382.5**

(22) Date of filing: **13.09.78**

(51) Int. Cl.³: **F 16 B 19/10, B 21 J 15/00**

(54) **Rivet packs and method of loading hollow rivets.**

(30) Priority: **16.09.77 GB 3868877**

(43) Date of publication of application:
**04.04.79 Bulletin 79/7**

(45) Publication of the grant of the European patent:
**25.03.81 Bulletin 81/12**

(84) Designated Contracting States:
**BE DE FR GB NL SE**

(56) References cited:
**GB - A - 559 918**
**GB - A - 1 029 118**
**US - A - 2 004 464**
**US - A - 2 930 503**
**US - A - 3 286 856**

(73) Proprietor: **USM Corporation**
**426 Colt Highway**
**Farmington Connecticut 06032 (US)**
(84) Designated Contracting States:
**BE DE FR NL SE**
(73) Proprietor: **TUCKER FASTENERS LIMITED**
**Walsall Road**
**Birmingham B42 1BP (GB)**
(84) Designated Contracting States:
**GB**

(72) Inventor: **Powderley, John**
**78 Jayshaw Avenue Great Barr**
**Birmingham (GB)**

(74) Representative: **Spencer, Hubert John et al,**
**PO Box No. 88 Belgrave Road**
**Leicester LE4 5BX (GB)**

Courier Press, Leamington Spa, England.

Rivet packs and method of loading hollow rivets

This invention concerns a method and a rivet pack for loading hollow rivets on to a headed mandrel so that they can be set in a pull-through blind riveting operation.

In one kind of blind riveting operation, a column of, for example, 30 to 60 rivets is assembled head to tail on a headed mandrel. The mandrel is inserted in a blind riveting tool which has means for gripping and pulling the mandrel through a rivet to set it, the rivets in the column being set successfully. This kind of blind riveting is referred to as "pull-through blind riveting".

A mandrel for use in pull-through blind riveting has to be of high quality to ensure that it is strong enough not to break while yet it is thin enough to be received in the bores of the rivets. Therefore, a mandrel is an expensive item which is reloaded with a fresh column of rivets when one column has been expended.

Reloading a mandrel with rivets by hand by positioning them one-by-one on the mandrel is laborious and is customarily avoided by packaging the rivets, in line head to tail, in a tube of aluminium foil (US - A - 3 286 856) or between strips of card or tape, slotted if need be to receive the rivet heads, and the mandrel is threaded through all the rivets and the tube, card or tape stripped away. This procedure has the disadvantages that it is expensive, clumsy, and causes an inconvenient amount of waste packaging material. This invention has the object of providing a method of loading hollow rivets which avoids these disadvantages and an assemblage for use in such a method.

It has been proposed to thread a column of rivets on to a wire on which they are placed in a jig which has a longitudinal channel for the rivet shanks and transverse grooves for their heads; (GB - A - 1 029 118). When the rivets are in the jig, the wire is removed and the mandrel is inserted. This procedure has the disadvantage that a jig is required and a different jig is required for each rivet size.

A method according to the invention comprises threading the mandrel into a sleeve on which a column of hollow rivets are assembled head to tail and transferring the rivets to the mandrel by sliding the rivets off the sleeve on to the mandrel and sliding the sleeve off the mandrel.

A pack of hollow rivets according to the invention for use in a method according to the invention comprises a column of hollow rivets assembled head to tail on a sleeve.

In order to prevent any possibility of a mandrel being threaded into an assemblage from the wrong direction, in another aspect of the invention the end of the sleeve into which the mandrel is not to be inserted is sealed.

Preferably, to achieve a desirable clearance between the rivets and the mandrel the sleeve is cylindrical and has a wall thickness of approximately 2.5% of the external shank diameter of the rivets.

In order to aid in transferring the rivets to the mandrel, the sleeve is flexible and extends far enough beyond the head of the rearmost rivet in the column to enable the sleeve to be pinched on to the mandrel to provide a grip thereon. The sleeve is preferably made of plastics material, for example polypropylene and acetal resin. Plastics materials also have the advantages of lightness and corrosion resistance and a range of colours can be used for identification purposes.

In order to prevent the rivets from falling off the sleeve, the sleeve is deformed at its ends. Preferably the end of the sleeve towards which the shanks of the rivets point is flared outwardly which also facilitates the introduction of a mandrel.

In order to assist in the riveting operation, the sleeve carries a lubricant which becomes transferred to the mandrel head.

An example of a method of loading hollow rivets on to a headed mandrel according to the invention and a pack for use in this method are described in detail hereafter and are illustrated by the accompanying drawings.

In the accompanying drawings:

Figure 1 is a perspective view of a pack of hollow rivets;

Figure 2 is a side view of the pack shown in Figure 1; and

Figures 3, 4 and 5 are perspective views of successive stages of a method of loading hollow rivets.

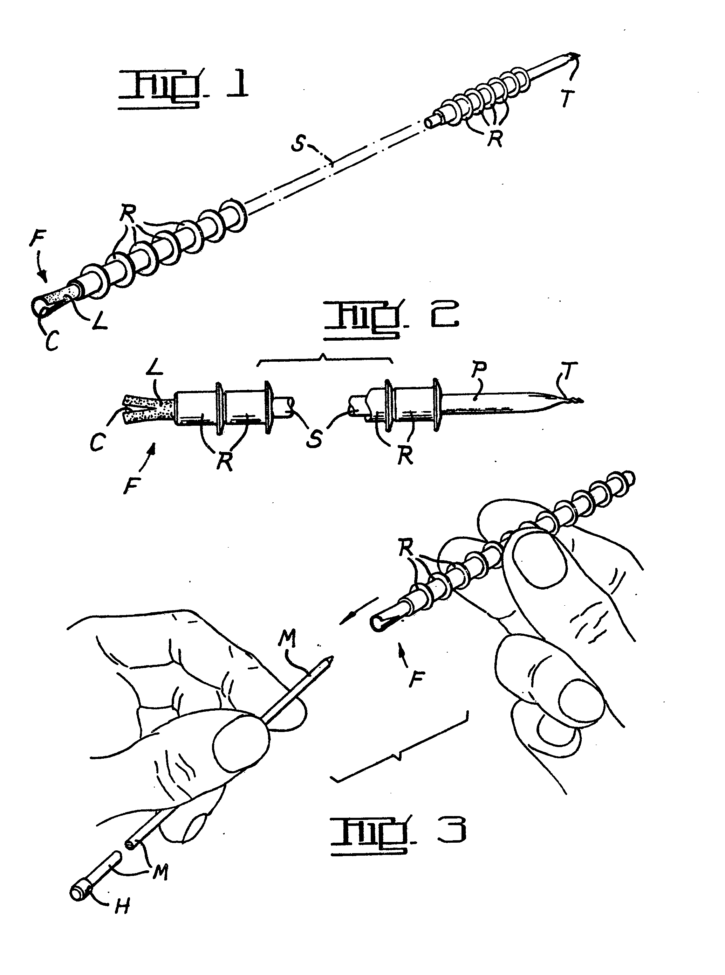

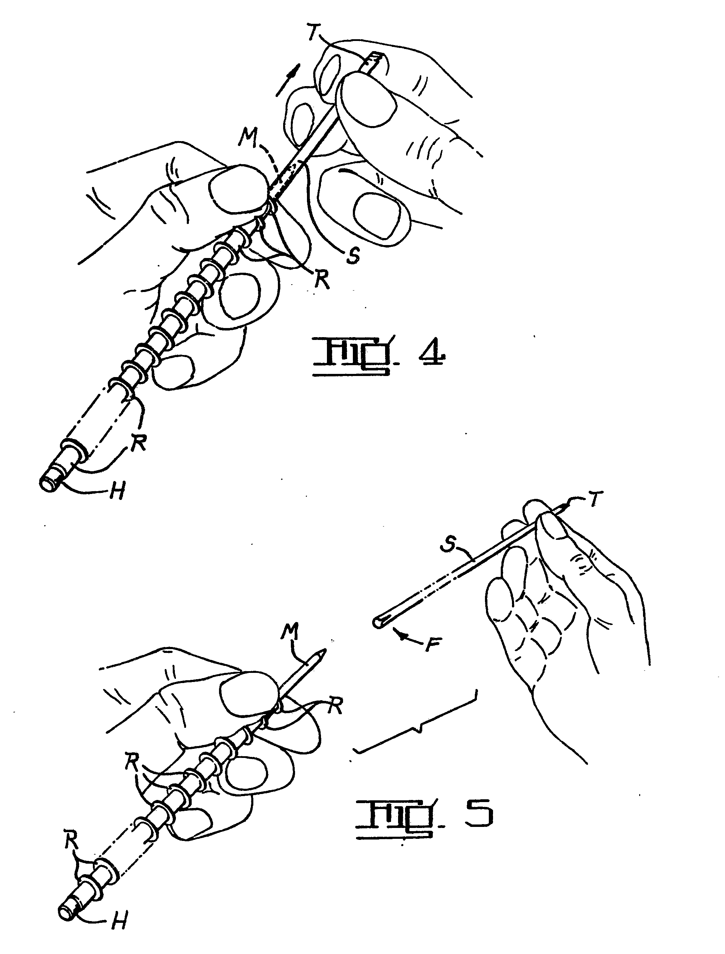

The pack shown in Figures 1 and 2 comprises a column of hollow rivets R assembled head to tail on a sleeve S. The ends of the sleeve S are deformed to prevent the rivets R falling off the sleeve S, the end F of the sleeve S towards which the shanks of the rivets R point being split at C and flared outwardly both to prevent the rivets R falling off and to facilitate introduction of a mandrel M into the sleeve S, and the other end T of the sleeve S, i.e. the end into which the mandrel M is not to be introduced, being sealed and flattened in an axial plane so that its width in that plane is increased.

The sleeve S is cylindrical and flexible being made of plastics material, viz. polypropylene. The rivets R have an external shank diameter of 0.32 cms and the sleeve S is a sliding fit within the rivets R having a wall thickness of 0.008 cms. Thus, the wall thickness of the sleeve S is approximately 2.5% of the external shank diameter of the rivets R. The sleeve S carries a lubricant L (Figure 2) at the end F thereof which becomes transferred to the head H of the mandrel M. The lubricant L may be encapsulated so that it becomes effective when the capsules are ruptured under pressure during a rivet setting operation.

In the method of loading hollow rivets R on to a headed mandrel M so that they can be set in a pull-through blind riveting operation illustrated by Figures 3, 4 and 5, the pack shown in Figures 1 and 2 is taken in one hand and the mandrel M in the other (Figure 3). The tip of the mandrel M is introduced into the sleeve S through the flared end F and the mandrel M is pushed through the sleeve S until its tip reaches the sealed end T of the sleeve S, whereupon the operator pinches the sleeve S at P thereby gripping the mandrel M. Thus, the sleeve S extends far enough beyond the head of the rearmost rivet R in the column to enable the sleeve S to be pinched on to the mandrel M to provide a grip thereon. The mandrel M has now been threaded into the sleeve S.

The next stage of the method (Figure 4) is transferring the rivets R to the mandrel M while withdrawing the sleeve S. The rivets R are slid along the sleeve S until the foremost rivet R reaches the mandrel head H while the mandrel M is gripped at P. As the column of rivets R moves along the mandrel M, however, without interrupting the relative movement between the rivets R and the sleeve S the operator slides the sleeve S off the mandrel M, leaving the rivets on the mandrel M (Figure 5). The pressure applied by the operator closes the flared end F of the sleeve S to allow the rivets R to pass over the end F and as they do so they collect lubricant L from the end F and transfer it to the mandrel M.

Whereas the sleeve S is of tubular form, a sleeve in accordance with the invention could be of C-shaped cross section such a sleeve would preferably extend at least 120° around a threaded mandrel. Such a sleeve made of flexible material has the advantage of being useable with a range of mandrel sizes.

## Claims

1. A method of loading hollow rivets (R) on to a headed mandrel (M) so that they can be set in a pull-through blind riveting operation, characterised in that the method comprises threading the mandrel (M) into a sleeve (S) on which a column of hollow rivets (R) are assembled head to tail and transferring the rivets (R) to the mandrel (M) by sliding the rivets (R) off the sleeve (S) on to the mandrel (M) and sliding the sleeve (S) off the mandrel (M).

2. A pack of hollow rivets (R) for use in a method according to claim 1 comprising a column of hollow rivets (R) assembled head to tail on a sleeve (S).

3. A pack according to claim 2 characterised in that, the end of the sleeve (S) into which the mandrel (M) is not to be introduced is sealed.

4. A pack according to either one of claims 3 and 4, characterised in that the sleeve (S) is cylindrical and has a wall thickness of approximately 2.5% of the external shank diameter of the rivets (R).

5. A pack according to any one of claims 2, 3 and 4, characterised in that the sleeve (S) is flexible.

6. A pack according to claim 5, characterised in that the sleeve (S) is made of plastics material.

7. A pack according to any one of claims 2, 3, 4, 5 and 6, characterised in that the sleeve (S) is deformed at its ends to prevent the rivets (R) falling off the sleeve (S).

8. A pack according to claim 7, characterised in that the end (F) of the sleeve (S) towards which the shanks of the rivets (R) point is flared outwardly to facilitate introduction of a mandrel (M).

9. A pack according to any one of claims 2, 3, 4, 5, 6, 7 and 8, characterised in that the sleeve (S) is flexible and extends far enough beyond the head of the rearmost rivet (R) in the column to enable the sleeve (S) to be pinched on to the mandrel (M) to provide a grip thereon.

10. A pack according to any one of claims 2, 3, 4, 5, 6, 7, 8 and 9, characterised in that the sleeve (S) carries a lubricant (L) which becomes transferred to the mandrel head (H).

## Revendications

1. Procédé de chargement de rivets creux (R) sur un mandrin (M) à tête, de façon qu'ils puissent être posés par tirage, procédé caractérisé en ce qu'il consiste à enfiler le mandrin (M) dans un manchon (S) sur lequel est placée une colonne de rivets creux (R) en enfilade et à transférer les rivets (R) sur le mandrin (M) en les faisant glisser à l'écart du manchon (S) sur le mandrin (M) et en faisant glisser ledit manchon (S) pour le séparer du mandrin (M).

2. Conditionnement de rivets creux (R) à utiliser pour la mise en oeuvre d'un procédé selon la revendication 1, conditionnement caractérisé en ce qu'il comprend une colonne de rivets creux (R) disposés en enfilade sur un manchon (S).

3. Conditionnement selon la revendication 2, caractérisé en ce que l'extrémité du manchon (S) dans laquelle le mandrin (M) n'est pas introduit, est scellée.

4. Conditionnement selon la revendication 3, caractérisé en ce que le manchon (S) est cylindrique et présente une paroi d'une épaisseur correspondant à environ 2,5% du diamètre externe de la tige des rivets (R).

5. Conditionnement selon l'une quelconque des revendications 2 à 4, caractérisé en ce que le manchon (S) est flexible.

6. Conditionnement selon la revendication 5 caractérisé en ce que le manchon (S) est en matière plastique.

7. Conditionnement selon l'une quelconque des revendications 2 à 6, caractérisé en ce que le manchon (S) est déformé à ses extrémités pour empêcher que les rivets (R) ne tombent du manchon (S).

8. Conditionnement selon la revendication 7, caractérisé en ce que l'extrémité (F) du manchon (S) vers laquelle sont tournées les tiges des rivets (R) est évasée pour faciliter l'introduction d'un mandrin (M).

9. Conditionnement selon l'une quelconque des revendications 2 à 8, caractérisé en ce que le manchon (S) est flexible et se prolonge d'une distance suffisante au-delà de la tête du dernier rivet (R) de la colonne pour permettre de le pincer sur le mandrin (M) afin d'assurer une prise sur ce dernier.

10. Conditionnement selon l'une quelconque des revendications 2 à 9, caractérisé en ce que le manchon (S) présente un lubrifiant (L) qui est transféré à la tête (H) du mandrin.

**Patentansprüche**

1. Verfahren zum Aufbringen von Hohlnieten auf einem mit Kopf versehenen Dorn, so daß sie im Durchzugsblindnietbetrieb gesetzt werden können, dadurch gekennzeichnet, daß der Dorn (M) in eine Hülse (S) eingeschoben wird, auf der eine Reihe von Hohlnieten (R) in jeweils gleicher Ausrichtung vorgesehen ist, und daß die Hohlnieten (R) dann dadurch an den Dorn (M) übergeben werden, daß sie von der Hülse (S) abgestreift und auf den Dorn (M) aufgeschoben werden und daß die Hülse (S) vom Dorn (M) abgezogen wird.

2. Hohlnietsatz zur Verwendung in einem Verfahren nach Anspruch 1, dadurch gekennzeichnet, daß er eine Reihe von Hohlnieten (R) aufweist, die in jeweils gleicher Ausrichtung auf eine Hülse (S) aufgereiht sind.

3. Hohlnietsatz nach Anspruch 2, dadurch gekennzeichnet, daß das dem Einführende gegenüberliegende Ende der Hülse (S) abgeschlossen ist.

4. Hohlnietsatz nach Anspruch 3 oder 4, dadurch gekennzeichnet, daß die Hülse (S) zylindrisch ist und eine Wandstärke von annähernd 2,5% des äußeren Schaftdurchmessers der Nieten (R) hat.

5. Hohlnietsatz nach einem der Ansprüche 2 bis 4, dadurch gekennzeichnet, daß die Hülse flexibel ist.

6. Hohlnietsatz nach Anspruch 5, dadurch gekennzeichnet, daß die Hülse (S) aus Kunststoff besteht.

7. Hohlnietsatz nach einem der Ansprüche 2 bis 6, dadurch gekennzeichnet, daß die Hülse (S) an ihren Enden deformiert ist, um ein Herausfallen der Nieten (R) zu verhindern.

8. Hohlnietsatz nach Anspruch 7, dadurch gekennzeichnet, daß das Ende (F) der Hülse (S) auf das die Schäfte der Nieten (R) zugerichtet sind, nach außen erweitert ist, um das Einführen eines Dorns (M) zu erleichtern.

9. Hohlnietsatz nach einem der Ansprüche 2 bis 8, dadurch gekennzeichnet, daß die Hülse (S) flexibel ist und weit genug über den Kopf des in der Reihe hintersten Niets (R) hinausragt, damit sie auf dem Dorn (M) festgeklemmt werden kann.

10. Hohlnietsatz nach einem der Ansprüche 2 bis 9, dadurch gekennzeichnet, daß die Hülse (S) ein Schmiermittel (L) trägt, das auf den Kopf (H) des Dorns übertragen wird.

FIG. 1

FIG. 2

FIG. 3

1

FIG. 4

FIG. 5